# EUROPEAN PATENT APPLICATION

(11) **EP 4 287 686 A1**
(43) Date of publication of application: **06.12.2023**
(21) Application number: 21922925.9
(22) Date of filing: 29.01.2021
(51) Int. Cl.: H04W 16/28, H04W 24/10, H04W 88/02

(54) **TERMINAL AND WIRELESS COMMUNICATION METHOD**

(71) Applicant: NTT DOCOMO, INC., Chiyoda-ku Tokyo 100-6150 (JP)
(72) Inventor: HARADA, Hiroki, Tokyo 100-6150 (JP); KURITA, Daisuke, Tokyo 100-6150 (JP); OKANO, Mayuko, Tokyo 100-6150 (JP); NAGATA, Satoshi, Tokyo 100-6150 (JP); OKAMURA, Masaya, Tokyo 100-6150 (JP); OHARA, Tomoya, Tokyo 100-6150 (JP)
(74) Representative: Hoffmann Eitle
(86) International application number: PCT/JP2021/003406
(87) International publication number: WO 2022/162911

(57) **Abstract**

A terminal receives a beam for measurement of a reference signal. At the same time, the terminal receives a beam for reception of data or measurement of a reference signal.

## Description

### [Technical Field]

The present invention relates to a terminal and a radio communication method.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Possible issues to be considered for Beyond 5G and 6G include the development of new frequency bands (100 GHz or higher frequency band, terahertz band, etc.), further speed-up in the existing 5G frequency band (100 GHz or less) (Examples: Narrow beam, coordinated transmission/reception between base stations, coordinated transmission/reception between terminals, etc.), reduction of power consumption for mobile terminals and mobile base stations, realization of long term use without charging, and further improvement of frequency use efficiency (reduction of overhead).

In 4G (LTE) and 5G (NR), the terminal assumes that the DL reference signal (For LTE: CRS (Cell-specific Reference Signal), CSI-RS (Channel State Information Reference Signal), For NR: SSB (Synchronization Signal Block), CSI-RS) used for RRM measurement is transmitted periodically.

As shown in non-Patent Literature 1, in NR, the RRM measurement operation takes precedence over scheduling in most cases, and scheduling restrictions occur to perform RRM measurement (see section 9.2.5.3, etc., in non-Patent Literature 1).

### [Citation List]

### [Non-Patent Literature]

Non-Patent Literature 1: 3GPP TS 38.133 "3rd Generation Partnership Project; Technical Specification Group Radio Access Network; NR; Requirements for support of radio resource management (Release 16)" Version 16.5.0 (2020 - 09)

### [Summary of Invention]

Here, when a terminal has multiple antenna panels, it is possible to simultaneously receive signals of different beams (different QCL (Quasi CoLocation) -type D) only for PDSCH data reception (Non-Patent Literature 1), but as mentioned above, RRM measurement and data reception cannot be performed at the same time due to scheduling constraints.

In view of this situation, the present invention has been made to shorten the RRM measurement operation time, suppress power consumption, and reduce overhead by simultaneously performing other reception operations without scheduling constraints while performing RRM measurement reception operations.

One aspect of the present invention is a terminal (UE 200) including a first reception unit (radio signal transmission and reception unit 210) that receives a beam for measurement of a reference signal, and a second reception unit (radio signal transmission and reception unit 210) that, with a same time of reception of the beam, receives a beam for reception of data or measurement of a reference signal.

One aspect of the present invention is a radio communication method of a terminal simultaneously performing the steps of receiving a beam for measurement of a reference signal, and receiving a beam for reception of data or measurement of a reference signal.

### [Brief Description of Drawings]

[Fig. 1]: Fig. 1 is an overall schematic diagram of radio communication system 10.
[Fig. 2]: Fig. 2 shows an example of a single panel forming beam # 0- # 5 in the conventional technology.
[Fig. 3]: Fig. 3 shows an example of a single panel forming beam # 0- # 5 in the present embodiment.
[Fig. 4]: Fig. 4 is a functional block diagram of the UE 200.
[Fig. 5]: Fig. 5 is a flow chart showing an example of the operating procedure when simultaneous reception is performed from a serving cell (SC) and a non-serving cell (NSC).
[Fig. 6]: Fig. 6 shows an example of the hardware configuration of the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

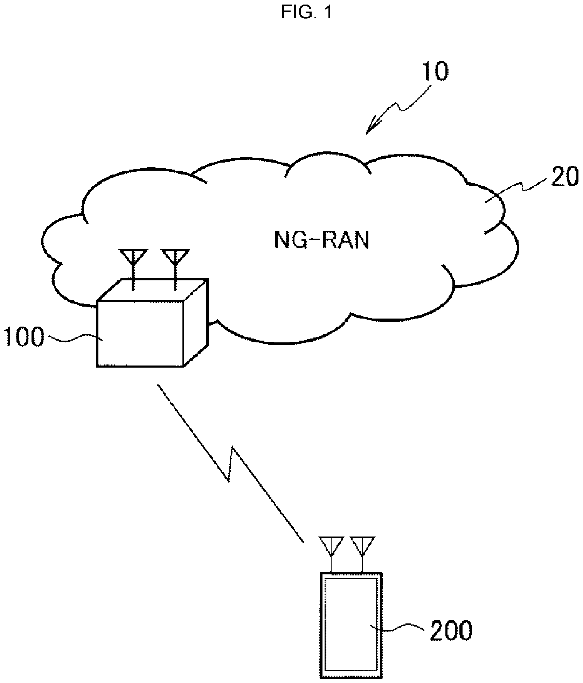

Fig. 1 is an overall schematic diagram of a radio communication system 10 according to the present embodiment. The radio communication system 10 is a radio communication system according to 5G New Radio (NR) or 6 G (may be called Beyond 5G) and includes a Next Generation-Radio Access Network 20 (Below: NG-RAN 20), and a terminal 200 (Below, UE 200). It should be noted that the radio communication system 10 supports at least one of the frequency bands from Frequency Range (FR) 1 (410 MHz to 7.125 GHz) and FR 2 (24.25 GHz to 52.6 GHz), and may support other frequency bands (For example, high frequency bands above FR2).

The NG-RAN 20 includes a radio base station 100 (Below: gNB 100). The specific configuration of radio communication system 10 including the number of gNBs and UEs and the number of antennas (panels) is not limited to the example shown in Fig. 1.

The NG-RAN 20 is actually connected to a core network (5GC or 6GC, not shown) that contains multiple NG-RAN nodes, specifically, gNBs (or ng-eNBs) and follows 5G or 6G (hereafter 5G/6G). Note that the NG-RAN 20 and 5 GC/6 GC may simply be described as a network.

The gNB 100 is a radio base station in accordance with 5G/6G and performs radio communication in accordance with UE 200 and 5G/6G. The gNB 100 and UE 200 are capable of supporting Massive MIMO (Multiple-Input Multiple-Output) which generates a more directional beam BM by controlling radio signals transmitted from multiple antenna elements, carrier aggregation (CA) which uses multiple component carriers (CCs) bundled together, dual connectivity (DC) which simultaneously communicates between the UE and each of the two NG-RAN nodes, and Integrated Access and Backhaul (IAB) which integrates radio backhaul between radio communication nodes such as the gNB and radio access to the UE.

Here, the gNB 100 and UE 200 are equipped with multiple antenna panels as shown. In this embodiment, the antenna panel is a unit of transmitting and receiving equipment and may be simply called a panel or simply an antenna. In this embodiment, beamforming can be performed for each panel. It should be noted that the illustration and the explanation of this embodiment are mainly described in the case where there are two panels, but the same configuration can be made in the case where there are more panels. That is, the number of antenna panels is not limited to the example illustrated (two in the example of Fig. 1).

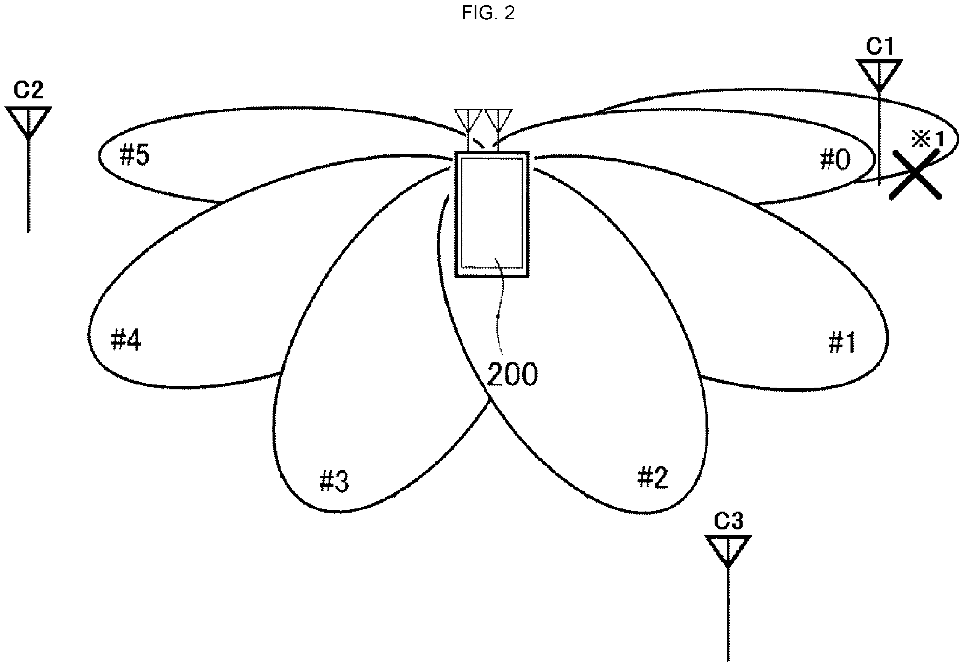

Here, in this embodiment, the panel can form a beam when receiving or transmitting. Here, Fig. 2 is a diagram showing an example in which one panel forms beam # 0- # 5 in the conventional technology.

In beamforming, since the direction in which radio waves are transmitted and received is narrowed, at a certain time, only a part of the area that can be covered can be transmitted and received. For this reason, a process called beam sweeping is performed, in which radio waves are beamformed and transmitted and received in sequence over the entire coverage area (For example, from # 0 to # 5 in Fig. 2) .

Then, conventionally, when a reference signal from a neighboring cell (e.g., C1 to C3 in the figure) is measured by beam sweeping using one panel, even if data communication is performed on another panel (In the example shown, even if the beam of * 1 is formed and data communication is in progress with cell C1,), scheduling constraints are applied and simultaneous reception operations cannot be performed. As a specific example, in FR1, when the SCS (Service Capability Server) of the data control CH and the SCS of the signal to be measured by RRM are different, scheduling restrictions are imposed on UEs that do not have the capability (Example: Capability such as SimultaneousRxDataSSB-DiffNumerology) to simultaneously receive signals from different SCS. Also, in FR2, scheduling restrictions are imposed because the beams used for transmitting and receiving the data control CH and the beams used for RRM measurement are different (there is an analog BF (Beam Forming) restriction). Therefore, in NR, RRM measurement operations are almost always preferred over scheduling, and scheduling restrictions are imposed for making RRM measurements (See, e.g., section 9.2.5.3.3, section 8.1.7.3, section 8.5.7.3, section 8.5.8.3 of non-patent literature 1.).

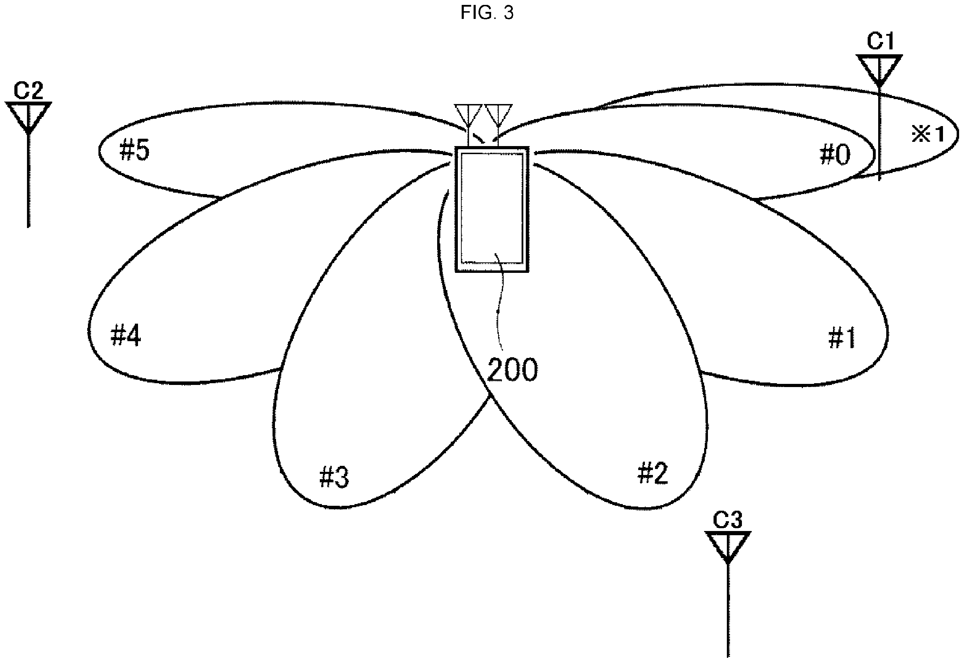

Here, Fig. 3 is a diagram showing an example of one panel forming beam # 0- # 5 in the present embodiment. As shown in Fig. 3, in the present embodiment, even when one panel is used to measure reference signals from neighboring cells (e.g., C1 to C3 in the figure) by beam sweeping, it is possible to simultaneously perform receiving operations such as data communication and reference signal measurement on other panels without scheduling constraints. In the illustrated example, while data communication with cell C1 by beam # 1 is continued on one panel, the reference signal can be measured by beam sweeping by beam # 0 - # 5 on the other panel at the same time. In the present embodiment, the reference signal (RS) includes the synchronization signal such as SSB, but the reference signal such as DMRS (Demodulation reference signal) may be distinguished from the synchronization signal such as SSB, and in the present embodiment, the reference signal may be replaced by the synchronization signal, or vice versa.

### (2)Function block configuration of radio communication system

Next, the functional block configuration of the radio communication system 10 will be described. Specifically, the functional block configuration of the UE 200 will be described.

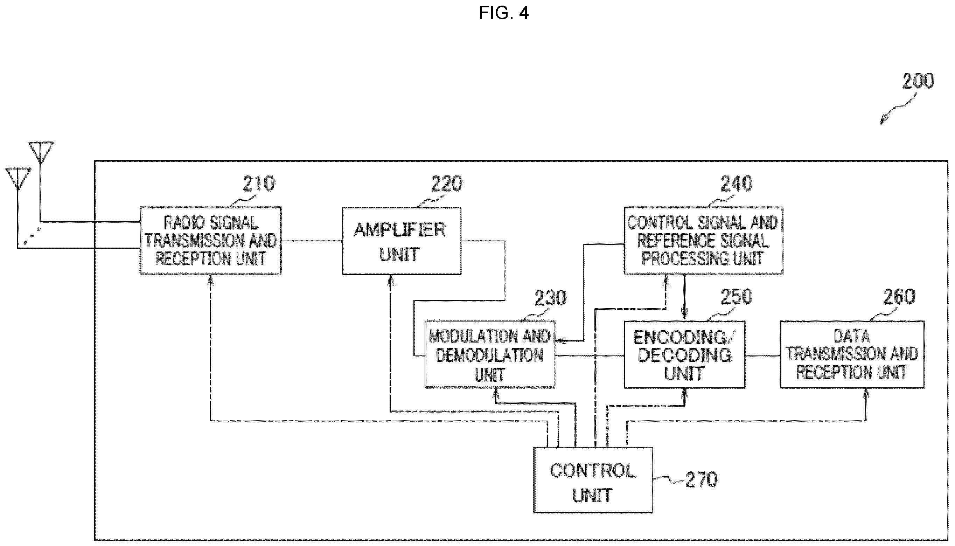

Fig. 4 is a functional block diagram of the UE 200. As shown in Fig. 4, the UE 200 comprises a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

The radio signal transmission and reception unit 210 transmits and receives radio signals in accordance with 5G/6 G. The radio signal transmission and reception unit 210 can support Massive MIMO, CA using multiple CCs bundled together, DC communicating simultaneously between the UE and each of the 2 NG-RAN nodes, and Integrated Access and Backhaul (IAB) integrating radio backhaul between radio communication nodes such as gNB and radio access to the UE.

In this embodiment, the radio signal transmission and reception unit 210 constitutes a reception unit that receives beams from one or more cells formed by one or more base stations (gNB 100). It should be noted that the radio signal transmission and reception unit 210 may be regarded, functionally conceptually, as having x number of reception unit corresponding to the number of antenna panels (x), or may be interpreted as having x number of reception unit corresponding to the physical multiple antenna panels.

As a specific example, when there are two antenna panels as shown in the figure of Fig. 4, the radio signal transmission and reception unit 210 constitutes a first reception unit that receives a beam for measurement of a reference signal and a second reception unit that can receive a beam for data reception or measurement of a reference signal simultaneously with reception of the beam. When there are more than 3 N antenna panels, the radio signal transmission and reception unit 210 is configured up to the N th reception unit (N = 1 to x), which can receive simultaneously.

Here, the radio signal transmission and reception unit 210 may receive a reference signal (CRS, CSI-RS, SSB, CSI-RS, etc., as well as control signals, etc., for which TCI (Transmission Configuration Index) is set) from each cell.

It should be noted that the radio signal transmission and reception unit 210 may be configured as a transmission unit that transmits information indicating its capability for simultaneous reception or transmission to a network (such as a gNB 100). As an example, the capability information may be at least one of the following:
▪Capability information indicating whether simultaneous reception and/or transmission is possible
▪Capability information indicating whether simultaneous reception and/or simultaneous transmission is possible in each case when data communication and/or reference signal measurement are performed simultaneously
▪Capability information indicating the number of beams or panels (such as number X in reception unit) that can be simultaneously received and/or transmitted
▪Capability information indicating the frequency bands (FR1, FR2, higher frequency bands, etc.) that can be simultaneously received and/or transmitted
▪Capability information on the presence or absence of scheduling constraints when simultaneous reception and/or transmission (for example, when simultaneous reception involves measurement of reference signals)
-Capability information indicating the availability of simultaneous reception and/or transmission for each type of measurement of reference signals (For example, each type of RRM measurement operation, RLM operation, BFD operation, and L1-RSRP/SINR measurement operation)

It should be noted that the capability information may also be assumed to have other relevant capabilities other than those indicated by the capability information. For example, when both data communication and reference signal measurement are performed simultaneously, if the capability information indicates that simultaneous reception is possible, it may also be assumed to have capabilities that are not subject to scheduling constraints. Thus, if one capability is in a relationship that includes other capabilities, it may also be assumed to have other capabilities with the capability information indicating that one capability. Other specific examples will be discussed later.

The amplifier unit 220 is composed of PA (Power Amplifier)/LNA (Low Noise Amplifier), etc. The amplifier unit 220 amplifies the signal output from the modulation and demodulation unit 230 to a prescribed power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (gNB 100 or another gNB, or each cell).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the gNB 100 via a predetermined control channel, for example, control signals such as a higher-layer signal, an RRC parameter, etc. The control signal and reference signal processing unit 240 also transmits various control signals toward the gNB 100 via a predetermined control channel.

The control signal and reference signal processing unit 240 also performs processing using a reference signal (RS) such as a demodulation reference signal (DMRS) and a phase tracking reference signal (PTRS).

DMRS is a known reference signal (pilot signal) between individual base stations and terminals for estimating the fading channel used for data demodulation. PTRS is a reference signal for individual terminals for estimating phase noise, which is a problem in high frequency bands.

In addition to DMRS and PTRS, reference signals include Channel State Information-Reference Signal (CSI-RS) and Sounding Reference Signal (SRS). In addition, control signal and reference signal processing unit 240 may perform processing on RRM, RLM (Radio Link Monitoring), BFD (beam failure detection), L1 (Layer 1) -RSRP (Reference signal received power)/SINR (Signal to Interference plus Noise Ratio).

The channel includes a control channel and a data channel. The control channels include PDCCH (Physical Downlink Control Channel), PUCCH (Physical Uplink Control Channel), RACH (Downlink Control Information (DCI) including Random Access Channel, Random Access Radio Network Temporary Identifier (RA-RNTI)), and Physical Broadcast Channel (PBCH).

Data channels include PDSCH (Physical Downlink Shared Channel) and PUSCH (Physical Downlink Shared Channel). Data means data transmitted through a data channel.

The encoding/decoding unit 250 performs data division/concatenation and channel coding/decoding for each predetermined communication destination (gNB 100 or another gNB, or each cell).

Specifically, the encoding/decoding unit 250 divides data output from the data transmission and reception unit 260 into predetermined sizes and performs channel coding on the divided data. The encoding/decoding unit 250 also decodes the data output from the modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). The data transmission and reception unit 260 also sends a hybrid automatic repeat request (ARQ). Note that the data transmission and reception unit 260 may perform data error correction and retransmission control based on the hybrid ARQ.

The control unit 270 controls each functional block that constitutes the UE 200. Specifically, in this embodiment, the control unit 270 identifies the received signal (especially the reference signal) of the beam received from one or more cells. Thus, the control unit 270 can determine candidate beams from the beam-swept beams (# 0 to # 5 in the example of Fig. 3) based on beam quality (e.g., RSRP), etc. For example, control unit 270 may select a new beam based on a predetermined threshold (For example, beams whose signal quality exceeds a threshold (For example, the RSRP threshold (in dBm or W (Watt))), etc.) among the multiple candidate beams, or the beam with the best signal quality among the multiple candidate beams may be selected as the new beam.

Since simultaneous reception is possible using multiple panels as described above, the control unit 270 can use the received beam in the direction of the serving cell (* 1 in the example in Fig. 3) to receive data while simultaneously determining beam failure or candidate beams based on the signal quality (For example, RSRP) of another beam of the serving cell or a beam of a non-serving cell. This can suppress unnecessary interruptions, power consumption or overhead or delay due to scheduling constraints, etc.

### (3)Operation of radio communication system

Here's how radio communication system 10 works.

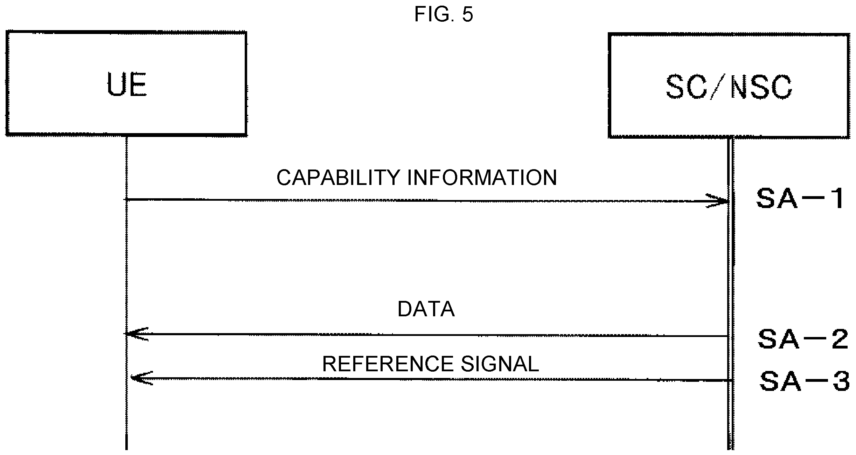

Here, Fig. 5 is a flowchart showing an example of the operating procedure when simultaneous reception is performed from a serving cell (SC) and a non-serving cell (NSC).

As shown in Fig. 5, the UE 200 first transmits capability information to the network indicating the capability of simultaneous reception (step SA -1).

The SC then transmits data to the UE 200, and the UE 200 receives the data through at least one of the panels (step SA -2).

Then, while the UE and SC are transmitting and receiving data, the NSC transmits a reference signal, and the UE 200 uses another panel to perform beam sweeping and receive the reference signal (step SA -3). It should be noted that the UE 200 may start data communication with the NSC by selecting the beam having the best reception quality (e.g., RSRP) of the reference signal among the multiple beams swept.

This concludes the explanation of an example of the operation of this embodiment. Note that the following operation options may be arbitrarily combined in this embodiment.

### (3.1) Option 1

By utilizing multiple panels, the capability of the terminal (UE capability) to simultaneously perform other receiving operations with different beams while performing the RRM measuring operation is specified as capability information.

Here, the terminal capability may be specified only for FR2 and/or higher high-frequency bands. That is, for FR2 and higher frequency bands, the compatibility may be reported separately.

Furthermore, the compatibility for licensed frequency and unlicensed frequency may be reported separately.

In addition, the terminal having the terminal capability may not be subject to scheduling constraints on other DL (Downlink) reception during the RRM measurement operation.

Furthermore, the terminal having the terminal capability may not be subject to scheduling constraints on at least one other DL reception during the RLM operation, the BFD operation, the L1-RSRP/SINR measurement operation, or the Positioning measurement operation.

It should be noted that at least one of the above can be reported separately.

### (3.2) Option 2

A terminal capability (UE capability) that can simultaneously perform other receiving operations with different beams while performing RRM measurement operations utilizing multiple panels is specified as capability information.

A terminal with the terminal capability may report a value related to the number of simultaneously received beams (or antenna panels) to the base station together with the terminal capability.

A terminal with the terminal capability may also report information related to the combination of QCL-D (TCI state ID, CSI-RS resource ID or SRS resource ID) that can receive simultaneously to the base station.
Example: Grouping of beams that can be generated by each panel
Example: Reporting of panel IDs for beam reporting

This capability information may be reported by either Capability, measurement report, CSI report (UCI) or MAC CE.

Terminals with terminal capabilities may be assumed to necessarily have at least one of the other terminal capabilities associated with simultaneous reception or transmission on different beams (For example, SimultaneousReceptionDiffTypeD-r 16, which indicates the ability to simultaneously receive data). Example: Capability may be specified to represent support for both simultaneous reception capabilities on different beams of data or control channel CH and the capabilities of the present embodiment.

The capability information listed above may be compiled as a single piece of information or separated into separate pieces of information. As a specific example, the capability to simultaneously transmit and the corresponding capability to simultaneously receive (such as the number of panels that can simultaneously transmit/receive) may be separated as separate capabilities or grouped into a single capability.

### (4)Operational effects

According to the above described embodiment, the following working effects can be obtained.

In this embodiment, the UE 200 is equipped with a first reception unit (a radio signal transmission and reception unit 210 corresponding to one panel) to receive a first beam for measurement of a reference signal and a second reception unit (a radio signal transmission and reception unit 210 corresponding to another panel) which, upon receipt of the first beam, can receive a second beam for receiving data or measuring a reference signal.

Therefore, the UE 200 can effectively utilize multiple panels to perform beamforming for measurement of a reference signal on one panel while simultaneously performing beamforming for data reception or measurement of a reference signal on the other panel.

Therefore, unnecessary interruptions, power consumption, overhead or delay due to scheduling constraints or the like can be suppressed.

In the present embodiment, the UE 200 can set whether or not simultaneous reception is possible for each frequency band. Thus, simultaneous reception can be set in a suitable frequency band, for example.

In the present embodiment, the UE 200 is not subject to scheduling constraints when simultaneous reception is performed. This allows simultaneous reception including measurement of the reference signal without considering scheduling.

Also, in this embodiment, the UE 200 has 3 or more beams capable of simultaneous reception or 3 or more reception unit capable of simultaneous reception. Thus, even when there are 3 or more panels, simultaneous reception can be performed on each panel.

Also, in the present embodiment, the UE 200 is further equipped with a transmission unit that transmits capability information to the network indicating capability with respect to simultaneous reception and/or simultaneous transmission. Thus, the capability of the terminal with respect to simultaneous transmission and reception can be grasped on the network side.

In the present embodiment, the UE 200 is also assumed to have other relevant capabilities other than the capability by the capability information. Thus, a large number of capabilities can be grasped with a small amount of capability information without configuring detailed capability information for each type.

Also, in this example, the UE 200 performs at least one of RRM measurement operation, RLM operation, BFD operation, L1-RSRP/SINR measurement operation and Positioning measurement operation as measurement of the reference signal. This enables the operation related to these reference signals to be performed simultaneously in parallel with data communication and the like.

### (5)Other Embodiments

Although the contents of the present invention have been described by way of the embodiments, it is obvious to those skilled in the art that the present invention is not limited to what is written here and that various modifications and improvements thereof are possible.

In addition, the block diagram (Fig. 4) used for the explanation of the above described embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

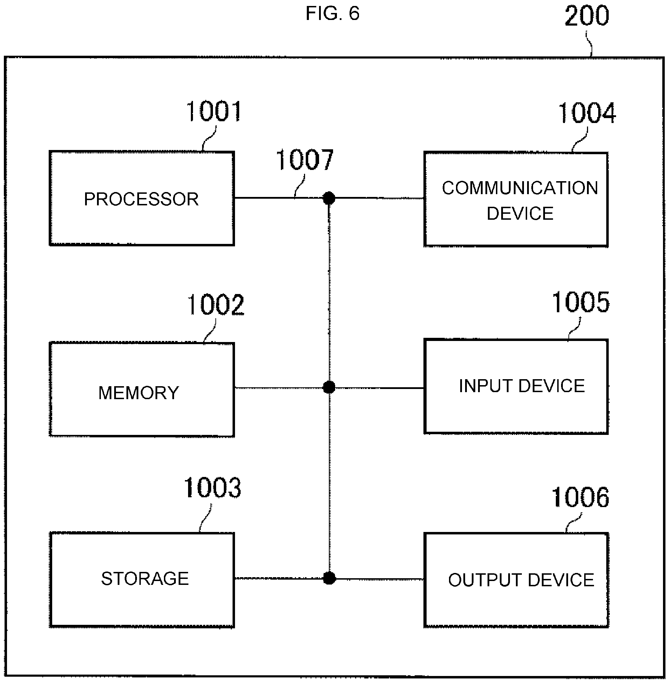

Furthermore, the UE 200 described above may function as a computer that performs processing of the radio communication method of this disclosure. Fig. 6 shows an example of the hardware configuration of the UE 200. As shown in Fig. 6, the UE 200 may be configured as a computer device including a processor 1001, a memory 1002, a storage 1003, an communication device 1004, an input device 1005, an output device 1006, a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the UE 200 is realized by any hardware element of the computer device or a combination of the hardware elements.

Each function of the UE 200 is realized by loading prescribed software (programs) on hardware such as the processor 1001, the memory 1002, etc., so that the processor 1001 performs operations and controls communication by communication device 1004 or at least one of reading and writing data in the memory 1002 and the storage 1003.

The processor 1001 controls the entire computer by, for example, operating the operating system. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

Furthermore, the device may be configured including hardware such as a microprocessor, a digital signal processor (DSP), an application specific integrated circuit (ASIC), a programmable logic device (PLD), a field programmable gate array (FPGA), etc., with which some or all of the functional blocks may be implemented. For example, the processor 1001 may be implemented by using at least one of these hardware.

Also, the notification of information is not limited to the mode/embodiment described in this disclosure and may be made using other methods. For example, notification of information may be performed by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Similarly, mobile stations in this disclosure may be read as base stations. In this case, the base station may have the function of the mobile station.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: NG-RAN
- 100: gNB
- 200: UE
- 210: radio signal transmission and reception unit
- 220: amplifier unit
- 230: modulation and demodulation unit
- 240: control signal and reference signal processing unit
- 250: encoding/decoding unit
- 260: data transmission and reception unit
- 270: control unit
- 1001: processor
- 1002: memory
- 1003: storage
- 1004: communication device
- 1005: input device
- 1006: output device
- 1007: bus

- BM: Beam
- SC: Serving Cell
- NSC: Non-Serving Cell

## Claims

1. A terminal comprising:
a first reception unit that receives a beam for measurement of a reference signal; and
a second reception unit that, with a same time of reception of the beam, receives a beam for reception of data or measurement of a reference signal.

2. The terminal according to claim 1, wherein the simultaneous reception is configured for each frequency band or scheduling constraint is not applied when the simultaneous reception is performed.

3. The terminal according to claim 1 or 2, wherein simultaneously receivable beams are 3 or more, or simultaneously receivable reception units are 3 or more.

4. The terminal according to any one of claims 1 to 3, further comprising a transmission unit that transmits capability information to a network indicating capability related to the simultaneous reception and/or the simultaneous transmission.

5. The terminal according to any one of claims 1 to 4, wherein it is assumed that the terminal also has other relevant capabilities other than the capability by the capability information.

6. The terminal according to any one of claims 1 to 5, wherein the measurement of the reference signal is at least one of an RRM measurement operation, an RLM operation, a BFD operation, an L1-RSRP/SINR measurement operation, and a Positioning measurement operation.

7. A radio communication method of a terminal simultaneously performing the steps of:
receiving a beam for measurement of a reference signal; and
receiving a beam for reception of data or measurement of a reference signal.
